# EUROPEAN PATENT APPLICATION

(11) **EP 3 418 338 A1**
(43) Date of publication of application: **26.12.2018**
(21) Application number: 17752931.0
(22) Date of filing: 30.01.2017
(51) Int. Cl.: C09J 7/00, C09J 4/02, C09J 4/06, C09J 175/04, C09J 181/04

(54) **POLYSULFIDE ADHESIVE TAPE**

(30) Priority: 15.02.2016 JP 2016025917
(71) Applicant: Nitto Denko Corporation, Ibaraki-shi, Osaka 567-8680 (JP)
(72) Inventor: KITAYAMA Kazuhiro, Ibaraki-shi Osaka 567-8680 (JP); MUTA Shigeki, Ibaraki-shi Osaka 567-8680 (JP)
(74) Representative: Müller-Boré & Partner Patentanwälte PartG mbB
(86) International application number: PCT/JP2017/003095
(87) International publication number: WO 2017/141668

(57) **Abstract**

Provided is a polysulfide-based pressure-sensitive adhesive tape that is excellent in oil resistance and the like, and sufficiently has a pressure-sensitive adhesive strength. The polysulfide-based pressure-sensitive adhesive tape of the present invention includes a pressure-sensitive adhesive layer formed from a polysulfide-based pressure-sensitive adhesive composition containing a sulfur-containing polymer, wherein the sulfur-containing polymer has a disulfide structure represented by -S-S- in amain chain thereof, and wherein a ball number for tack of the pressure-sensitive adhesive layer measured by an inclined ball tack test method (inclination angle: 30°) specified in JIS Z 0237 at a temperature of 23°C and a humidity of 65% is 2 or more.

## Description

### Technical Field

The present invention relates to a polysulfide-based pressure-sensitive adhesive tape.

### Background Art

Liquid polysulfide has heretofore been commercially utilized as one sealing agent (for example, Patent Literatures 1 to 3).

The liquid polysulfide is easily oxidized by an oxidant, such as lead dioxide or manganese dioxide, to cure. A rubber-like cured product obtained by the curing of the liquid polysulfide contains a sulfur atom in the main chain of a molecule thereof, and is free of any double bond. Accordingly, the cured product is excellent in oil resistance, weatherability, water tightness, and air tightness, and hence has been utilized as a sealing agent for a building material, a vehicle, an aircraft, a ship, or the like.

However, the liquid polysulfide is liquid, and hence involves a problem in that its sealing work on a large adherend, such as a building material, a vehicle, an aircraft, or a ship, by application requires enormous time.

In addition, the liquid polysulfide is liquid, and hence involves a problem in that its curing after its sealing work requires considerable time, with the result that an adherend needs to be left at rest until the curing is completed.

### Citation List

### Patent Literature

[PTL 1] JP 4227787 B2
[PTL 2] JP 3442860 B2
[PTL 3] JP 2013-119519 A

### Summary of Invention

### Technical Problem

The inventors of the present invention have made extensive investigations with a view to providing a polysulfide-based sealing agent that facilitates sealing work and does not require time for its curing after the sealing work. As a result, the inventors have paid attention to the provision of the polysulfide-based sealing agent in the form of a pressure-sensitive adhesive tape that is markedly improved in workability through the use of a tape dispenser or the like. However, conventional liquid polysulfide is liquid, and hence cannot maintain the shape of the pressure-sensitive adhesive layer of the pressure-sensitive adhesive tape unless treated.

An object of the present invention is to provide a polysulfide-based pressure-sensitive adhesive tape that is excellent in oil resistance and the like, and sufficiently has a pressure-sensitive adhesive strength.

### Solution to Problem

According to one embodiment of the present invention, there is provided a polysulfide-based pressure-sensitive adhesive tape, including a pressure-sensitive adhesive layer formed from a polysulfide-based pressure-sensitive adhesive composition containing a sulfur-containing polymer,
wherein the sulfur-containing polymer has a disulfide structure represented by -S-S- in a main chain thereof, and
wherein a ball number for tack of the pressure-sensitive adhesive layer measured by an inclined ball tack test method (inclination angle: 30°) specified in JIS Z 0237 at a temperature of 23°C and a humidity of 65% is 2 or more.

In one embodiment, the sulfur-containing polymer has an ether structure represented by the general formula (1) in the main chain:

-R¹-O-R²-O-R³- ·· ·(1)

in the general formula (1), R¹, R², and R³ each independently represent an alkylene group having 1 to 4 carbon atoms.

In one embodiment, the sulfur-containing polymer has a bonding structure represented by the general formula (2) in the main chain.

-S-C(=O)-NH- ·· ·(2)

In one embodiment, the sulfur-containing polymer includes a product of a reaction between a polysulfide polymer (P2) and a (meth) acrylic monomer caused by irradiation with an active energy ray, the polysulfide polymer (P2) being obtained by increasing a molecular weight of a polysulfide oligomer (P1) having a molecular weight of from 500 to 10, 000 with a chain extender, the polysulfide oligomer (P1) having thiol groups at both terminals thereof and having a disulfide structure represented by -S-S- in a main chain thereof.

In one embodiment, the chain extender includes a polyisocyanate compound.

In one embodiment, the polyisocyanate compound includes a diisocyanate compound.

In one embodiment, the (meth)acrylic monomer contains a polyfunctional (meth)acrylate monomer.

In one embodiment, the polyfunctional (meth) acrylate monomer includes a bifunctional (meth)acrylate monomer.

### Advantageous Effects of Invention

According to one embodiment of the present invention, the polysulfide-based pressure-sensitive adhesive tape that is excellent in oil resistance and the like, and sufficiently has a pressure-sensitive adhesive strength can be provided.

### Brief Description of Drawings

FIG. 1 is a schematic sectional view of a polysulfide-based pressure-sensitive adhesive tape according to one embodiment of the present invention.
FIG. 2 is a schematic sectional view of a measurement sample (A) in an oil resistance evaluation when viewed from a short-side side thereof.
FIG. 3 is a schematic sectional view of the measurement sample (A) removed from a Hyjet V bath (B) in the oil resistance evaluation when viewed from the short-side side.

### Description of Embodiments

### <<Polysulfide-based Pressure-sensitive Adhesive Tape>>

A polysulfide-based pressure-sensitive adhesive tape of the present invention includes a pressure-sensitive adhesive layer formed from a polysulfide-based pressure-sensitive adhesive composition. The pressure-sensitive adhesive layer formed from the polysulfide-based pressure-sensitive adhesive composition is obtained by forming the polysulfide-based pressure-sensitive adhesive composition into the structure of a pressure-sensitive adhesive layer. That is, the pressure-sensitive adhesive layer is preferably formed of the polysulfide-based pressure-sensitive adhesive composition.

The thickness of the pressure-sensitive adhesive layer is preferably from 50 µm to 4,000 µm, more preferably from 100 µm to 3,000 µm, still more preferably from 300 µm to 2,000 µm, particularly preferably from 500 µm to 1,800 µm, most preferably from 800 µm to 1,500 µm.

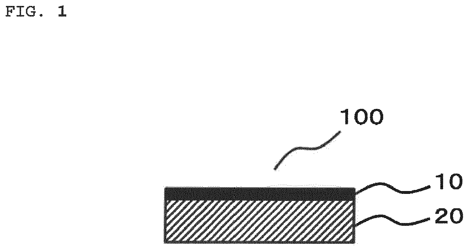

The polysulfide-based pressure-sensitive adhesive tape of the present invention may include a base material. Any appropriate base material may be adopted as the base material to the extent that the effects of the present invention are not impaired. Examples of such base material include a release liner and a plastic sheet. FIG. 1 is a schematic sectional view of the pressure-sensitive adhesive tape of the present invention. In FIG. **1****,** a polysulfide-based pressure-sensitive adhesive tape **100** of the present invention includes a base material **10** and a pressure-sensitive adhesive layer **20.**

The thickness of the base material is preferably from 1 µm to 300 µm, more preferably from 5 µm to 200 µm, still more preferably from 12 µm to 150 µm, particularly preferably from 25 µm to 125 µm, most preferably from 50 µm to 100 µm.

For example, a base material having a release-treated layer, a low-adhesive base material formed of a fluorine-based polymer, or a low-adhesive base material formed of a nonpolar polymer may be used as the release liner. Examples of the base material having the release-treated layer include a plastic film and paper each of which has been subjected to a surface treatment with a release treatment agent, such as a silicone-based release treatment agent, a long-chain alkyl-based release treatment agent, a fluorine-based release treatment agent, or a molybdenum sulfide-based release treatment agent.

Examples of the fluorine-based polymer in the low-adhesive base material formed of the fluorine-based polymer include polytetrafluoroethylene, polychlorotrifluoroethylene, polyvinyl fluoride, polyvinylidene fluoride, a tetrafluoroethylene-hexafluoropropylene copolymer, and a chlorofluoroethylene-vinylidene fluoride copolymer.

Examples of the nonpolar polymer in the low-adhesive base material formed of the nonpolar polymer include olefin-based resins (e.g., polyethylene and polypropylene).

The release liner may be formed by any appropriate method.

The release liner may be peeled after the polysulfide-based pressure-sensitive adhesive tape of the present invention has been worked.

Any appropriate plastic sheet may be adopted as the plastic sheet to the extent that the effects of the present invention are not impaired. Examples of such plastic sheet include polyethylene (PE), polypropylene (PP), polyethylene terephthalate (PET), polyimide (PI), polyphenylene sulfide (PPS), and polytetrafluoroethylene (PTFE).

### <<Pressure-sensitive Adhesive Layer>>

The pressure-sensitive adhesive layer is formed from the polysulfide-based pressure-sensitive adhesive composition. That is, the pressure-sensitive adhesive layer is obtained by forming the polysulfide-based pressure-sensitive adhesive composition into the structure of a pressure-sensitive adhesive layer. That is, the pressure-sensitive adhesive layer is preferably formed of the polysulfide-based pressure-sensitive adhesive composition.

Unlike conventional liquid polysulfide, the polysulfide-based pressure-sensitive adhesive composition can maintain the shape of a pressure-sensitive adhesive layer when turned into the shape. Accordingly, the polysulfide-based pressure-sensitive adhesive composition can be provided in the form of a pressure-sensitive adhesive tape that is markedly improved in workability through the use of a tape dispenser or the like.

The pressure-sensitive adhesive strength of the pressure-sensitive adhesive layer to polyethylene terephthalate at a temperature of 23°C and a humidity of 65% is 0.5 N/20 mm or more, preferably 1 N/20 mm or more, more preferably 3 N/20 mm or more, particularly preferably 5 N/20 mm or more, most preferably 10 N/20 mm or more. An upper limit for the pressure-sensitive adhesive strength is preferably 100 N/20 mm or less. When the pressure-sensitive adhesive strength falls within the range, the polysulfide-based pressure-sensitive adhesive tape of the present invention can sufficiently express its pressure-sensitive adhesive strength. A method of measuring the pressure-sensitive adhesive strength to the polyethylene terephthalate at a temperature of 23°C and a humidity of 65% is described in detail later.

A ball number for the tack of the pressure-sensitive adhesive layer measured by an inclined ball tack test method (inclination angle: 30°) specified in JIS Z 0237 at a temperature of 23°C and a humidity of 65% is 2 or more, preferably 3 or more, more preferably 5 or more, particularly preferably 8 or more, most preferably 10 or more. An upper limit for the ball number is preferably 32 or less. When the ball number falls within the range, the polysulfide-based pressure-sensitive adhesive tape of the present invention can sufficiently express its pressure-sensitive adhesive strength. A ball tack test is described in detail later.

The storage modulus of elasticity of the pressure-sensitive adhesive layer at a temperature of 25°C is 1×10³ Pa or more, preferably 5×10³ Pa or more, more preferably 1×10⁴ Pa or more, particularly preferably 2×10⁴ Pa or more, most preferably 3×10⁴ Pa or more. An upper limit for the storage modulus of elasticity is preferably 1×10⁶ Pa or less. When the storage modulus of elasticity falls within the range, the polysulfide-based pressure-sensitive adhesive tape of the present invention can sufficiently express its pressure-sensitive adhesive strength. A method of measuring the storage modulus of elasticity at a temperature of 25°C is described in detail later.

The polysulfide-based pressure-sensitive adhesive composition contains a sulfur-containing polymer. The number of kinds of the sulfur-containing polymers in the polysulfide-based pressure-sensitive adhesive composition may be one, or may be two or more.

The content of the sulfur-containing polymer in the polysulfide-based pressure-sensitive adhesive composition is preferably from 10 wt% to 99.9 wt%, more preferably from 30 wt% to 99 wt%, still more preferably from 50 wt% to 99 wt%, particularly preferably from 70 wt% to 99 wt%, most preferably from 75 wt% to 99 wt% because the effects of the present invention can be expressed to a larger extent. When the content of the sulfur-containing polymer in the polysulfide-based pressure-sensitive adhesive composition falls within the range, the polysulfide-based pressure-sensitive adhesive tape of the present invention is more excellent in oil resistance and the like, and more sufficiently has a pressure-sensitive adhesive strength.

The sulfur-containing polymer has a disulfide structure represented by -S-S- in its main chain. When the sulfur-containing polymer has the disulfide structure represented by -S-S- in the main chain, the polysulfide-based pressure-sensitive adhesive composition is excellent in oil resistance and the like. The number of the disulfide structures each represented by -S-S- in the main chain of the sulfur-containing polymer may be one, or may be two or more.

The sulfur-containing polymer preferably has an ether structure represented by the general formula (1) in the main chain.

-R¹-O-R²-O-R3- ··· (1)

The number of the ether structures each represented by the general formula (1) in the main chain of the sulfur-containing polymer may be one, or may be two or more.

In the general formula (1), R¹, R², and R³ each independently represent an alkylene group having 1 to 4 carbon atoms, preferably an alkylene group having 1 to 3 carbon atoms, more preferably an alkylene group having 1 or 2 carbon atoms.

When the sulfur-containing polymer has the ether structure represented by the general formula (1) in the main chain, the polysulfide-based pressure-sensitive adhesive composition is more excellent in oil resistance and the like.

The sulfur-containing polymer preferably has a bonding structure represented by the general formula (2) in the main chain.

-S-C(=O)-NH- ··· (2)

The number of the bonding structures each represented by the general formula (2) in the main chain of the sulfur-containing polymer may be one, or may be two or more.

When the sulfur-containing polymer has the bonding structure represented by the general formula (2) in the main chain, the polysulfide-based pressure-sensitive adhesive composition can maintain the shape of a pressure-sensitive adhesive layer to a larger extent when turned into the shape, is more excellent in oil resistance and the like, and more sufficiently has apressure-sensitive adhesive strength.

The sulfur-containing polymer preferably has a structural unit derived from a (meth)acrylic monomer. The term "structural unit derived from a (meth) acrylic monomer" refers to a structural unit formed by the cleavage of the unsaturated double bond of the monomer caused by its polymerization. The term "structural unit formed by the cleavage of the unsaturated double bond of the monomer caused by its polymerization" refers to a structural unit "-RpRqC-CRrRs-" formed by the cleavage of the unsaturated double bond "C=C" of a structure "RpRqC=CRrRs" (where Rp, Rq, Rr, and Rs each represent any appropriate group bonded to a carbon atom through a single bond) caused by its polymerization. When the (meth)acrylic monomer is polyfunctional, the unsaturated double bond is present in plurality. When the sulfur-containing polymer has the structural unit derived from the (meth)acrylic monomer, the polysulfide-based pressure-sensitive adhesive tape of the present invention is more excellent in oil resistance and the like, and more sufficiently has a pressure-sensitive adhesive strength.

In the present invention, the term "(meth)acrylic" means acrylic and/or methacrylic, and the term "(meth)acrylate" means an acrylate and/or a methacrylate.

The number of the structural units each derived from the (meth) acrylic monomer that may be present in the sulfur-containing polymer may be one, or may be two or more. In addition, the number of kinds of the structural units each derived from the (meth) acrylic monomer that may be present in the sulfur-containing polymer may be one, or may be two or more.

Examples of the (meth) acrylic monomer include a (meth) acrylic acid-based monomer and a monofunctional (meth)acrylate monomer.

Examples of the (meth)acrylic acid-based monomer include acrylic acid, methacrylic acid, maleic acid, and crotonic acid. The (meth)acrylic acid-based monomer is preferably acrylic acid because the effects of the present invention can be expressed to a larger extent.

Examples of the monofunctional (meth) acrylate monomer include n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate, 3-methoxybutyl acrylate, acryloylmorpholine, isobornyl acrylate, dicyclopentanyl acrylate, t-butyl acrylate, cyclohexyl acrylate, and lauryl acrylate. The monofunctional (meth) acrylate monomer is preferably n-butyl acrylate because the effects of the present invention can be expressed to a larger extent.

The (meth)acrylic monomer preferably contains a polyfunctional (meth)acrylate monomer.

Examples of the polyfunctional (meth)acrylate monomer include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylate, epoxy acrylate, and polyester acrylate. The polyfunctional (meth)acrylate monomer is preferably a difunctional (meth)acrylate monomer, more preferably hexanediol di(meth)acrylate because the effects of the present invention can be expressed to a larger extent.

The sulfur-containing polymer may have a structural unit derived from any other monomer. The number of the structural units each derived from the other monomer that may be present in the sulfur-containing polymer may be one, or may be two or more. In addition, the number of kinds of the structural units each derived from the other monomer that may be present in the sulfur-containing polymer may be one, or may be two or more.

Examples of the other monomer include vinyl acetate, vinyl propionate, styrene, acrylamide, methacrylamide, a monoester or diester of maleic acid, derivatives thereof, N-methylolacrylamide, glycidyl acrylate, glycidyl methacrylate, N,N-dimethylaminoethyl acrylate, N,N-dimethylaminopropyl methacrylamide, 2-hydroxypropyl acrylate, N,N-dimethylacrylamide, N,N-diethylacrylamide, imide acrylate, N-vinylpyrrolidone, oligoester acrylate, ε-caprolactone acrylate, dicyclopentanyl (meth)acrylate, dicyclopentenyl (meth)acrylate, methoxylated cyclododecatriene acrylate, and methoxyethyl acrylate. The other monomer is preferably N-vinylpyrrolidone because the effects of the present invention can be expressed to a larger extent.

The sulfur-containing polymer is preferably a product of a reaction between a polysulfide polymer (P2) and a (meth)acrylic monomer caused by irradiation with an active energy ray, the polysulfide polymer (P2) being obtained by increasing a molecular weight of a polysulfide oligomer (P1) having a molecular weight of from 500 to 10, 000 with a chain extender, the polysulfide oligomer (P1) having thiol groups at both terminals thereof and having a disulfide structure represented by -S-S- in a main chain thereof. When the sulfur-containing polymer is such reaction product, the polysulfide-based pressure-sensitive adhesive tape of the present invention is more excellent in oil resistance and the like, and more sufficiently has a pressure-sensitive adhesive strength.

Any appropriate catalyst may be adopted in a reaction in which the polysulfide oligomer (P1) is increased in molecular weight with the chain extender to provide the polysulfide polymer (P2) to the extent that the effects of the present invention are not impaired.

Any appropriate reaction temperature may be adopted in the reaction in which the polysulfide oligomer (P1) is increased in molecular weight with the chain extender to provide the polysulfide polymer (P2) to the extent that the effects of the present invention are not impaired. Such reaction temperature is preferably from 0°C to 100°C, more preferably from 5°C to 100°C, still more preferably from 10°C to 100°C, particularly preferably from 15°C to 100°C, most preferably from 20°C to 80°C. When such reaction temperature is adopted, the reaction in which the polysulfide oligomer (P1) is increased in molecular weight with the chain extender to provide the polysulfide polymer (P2) can efficiently advance.

The polysulfide oligomer (P1) has thiol groups (-SH groups) at both the terminals and has a disulfide structure represented by -S-S- in the main chain.

The polysulfide oligomer (P1) preferably has an ether structure represented by the general formula (1) in the main chain.

-R¹-O-R²-O-R³- ··· (1)

In the general formula (1), R¹, R², and R³ each independently represent an alkylene group having 1 to 4 carbon atoms, preferably an alkylene group having 1 to 3 carbon atoms, more preferably an alkylene group having 1 or 2 carbon atoms.

The polysulfide oligomer (P1) is more preferably represented by the general formula (3).

HS-(R¹-O-R²-O-R³-S-S)ₙ-R¹-O-R²-O-R³-SH ··· (3)

In the general formula (3), R¹, R², and R³ each independently represent an alkylene group having 1 to 4 carbon atoms, preferably an alkylene group having 1 to 3 carbon atoms, more preferably an alkylene group having 1 or 2 carbon atoms. In the general formula (3), n represents an integer selected so that the molecular weight of the polysulfide oligomer may fall within the range of from 1,000 to 7,500.

The molecular weight of the polysulfide oligomer (P1) is from 500 to 10,000, preferably from 700 to 9,000, more preferably from 800 to 8,500, particularly preferably from 900 to 8,000, most preferably from 1,000 to 7,500.

Any appropriate chain extender may be adopted as the chain extender to the extent that the effects of the present invention are not impaired as long as the chain extender can increase the molecular weight of the polysulfide oligomer (P1). Such chain extender is preferably a compound having, in a molecule thereof, two or more functional groups each of which reacts with a thiol group to form a bond. Examples of such chain extender include a polyisocyanate compound, an epoxy compound, an acrylate compound, and a thiol compound. Of those, a polyisocyanate compound is preferred, and a diisocyanate compound is more preferred because the effects of the present invention can be expressed to a larger extent.

Any appropriate usage ratio may be adopted as a usage ratio between the polysulfide oligomer (P1) and the chain extender to the extent that the effects of the present invention are not impaired. For example, when the chain extender is a diisocyanate compound, such usage ratio is preferably from 0.05 to 2, more preferably from 0.1 to 1, still more preferably from 0.15 to 0.8, particularly preferably from 0.2 to 0.6, most preferably from 0.3 to 0.5 in terms of a ratio "NCO/SH" (equivalent ratio).

Examples of the diisocyanate compound include: an aromatic, aliphatic, or alicyclic diisocyanate; a dimer or trimer of the diisocyanate; and polyphenylmethane diisocyanate. The number of kinds of the diisocyanates may be only one, or may be two or more.

Examples of the aromatic, aliphatic, or alicyclic diisocyanate include tolylene diisocyanate, hydrogenated tolylene diisocyanate, 4,4-diphenylmethane diisocyanate, hydrogenated 4,4-diphenylmethane diisocyanate, hexamethylene diisocyanate, xylylene diisocyanate, hydrogenated xylylene diisocyanate, isophorone diisocyanate, hydrogenated diphenylmethane diisocyanate, 1,5-naphthylene diisocyanate, 1,3-phenylene diisocyanate, 1,4-phenylenediisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, and m-tetramethylxylylene diisocyanate.

The trimer of the aromatic, aliphatic, or alicyclic diisocyanate is, for example, an isocyanurate-, biuret-, or allophanate-type trimer.

The diisocyanate compound is preferably hexamethylene diisocyanate (HDI), hydrogenated tolylene diisocyanate (HTDI), hydrogenated 4,4-diphenylmethane diisocyanate (HMDI), isophorone diisocyanate (IPDI), and hydrogenated xylene diisocyanate (HXDI) . Of those, hexamethylene diisocyanate (HDI) is preferred because the effects of the present invention can be expressed to a larger extent.

The polysulfide oligomer (P1) is increased in molecular weight with the chain extender as described above to provide the polysulfide polymer (P2).

When a polyisocyanate compound is adopted as the chain extender, the polysulfide polymer (P2) has a bonding structure represented by the general formula (2) in its main chain.

-S-C(=O)-NH- ··· (2)

The molecular weight of the polysulfide polymer (P2) is preferably from 10,000 to 100,000, more preferably from 12,000 to 80,000, particularly preferably from 13,000 to 50,000, most preferably from 15,000 to 25,000.

As described above, the sulfur-containing polymer is preferably the product of the reaction between the polysulfide polymer (P2) and the (meth) acrylic monomer caused by the irradiation with the active energy ray.

Any appropriate (meth)acrylic monomer may be adopted as the (meth)acrylic monomer to the extent that the effects of the present invention are not impaired. Examples of such (meth)acrylic monomer include a (meth)acrylic acid-based monomer and a (meth)acrylate-based monomer. The number of kinds of the (meth) acrylic acid-based monomers may be only one, or may be two or more. The number of kinds of the (meth)acrylate-based monomers may be only one, or may be two or more.

Examples of the (meth)acrylic acid-based monomer include acrylic acid, methacrylic acid, maleic acid, and crotonic acid. The (meth)acrylic acid-based monomer is preferably acrylic acid because the effects of the present invention can be expressed to a larger extent.

The content of the (meth)acrylic acid-based monomer in the entirety of raw material monomers for obtaining the product of the reaction caused by the irradiation with the active energy ray is preferably 0 wt% or more, more preferably 0.5 wt% or more, still more preferably 1 wt% or more, particularly preferably 1.5 wt% or more, most preferably 2 wt% or more. When the content falls within the range, the polysulfide-based pressure-sensitive adhesive tape of the present invention more sufficiently has a pressure-sensitive adhesive strength. An upper limit for the content is preferably 10 wt% or less, more preferably 8 wt% or less, still more preferably 5 wt% or less, particularly preferably 4 wt% or less, most preferably 3 wt% or less. When the content falls within the range, the pressure-sensitive adhesive tape is more excellent in oil resistance and the like.

Examples of the (meth)acrylate-based monomer include n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate, 3-methoxybutyl acrylate, acryloylmorpholine, isobornyl acrylate, dicyclopentanyl acrylate, t-butyl acrylate, cyclohexyl acrylate, and lauryl acrylate. The (meth)acrylate-based monomer is preferably n-butyl acrylate because the effects of the present invention can be expressed to a larger extent.

The content of the (meth) acrylate-basedmonomer in the entirety of raw material monomers for obtaining the product of the reaction caused by the irradiation with the active energy ray is preferably 1 wt% or more, more preferably 2 wt% or more, still more preferably 3 wt% or more, particularly preferably 4 wt% or more, most preferably 5 wt% or more. When the content falls within the range, the polysulfide-based pressure-sensitive adhesive tape of the present invention more sufficiently has a pressure-sensitive adhesive strength. An upper limit for the content is preferably 30 wt% or less, more preferably 20 wt% or less, still more preferably 15 wt% or less, particularly preferably 12 wt% or less, most preferably 10 wt% or less. When the content falls within the range, the pressure-sensitive adhesive tape is more excellent in oil resistance and the like.

Any other monomer may be adopted as a raw material monomer for obtaining the product of the reaction caused by the irradiation with the active energy ray. The number of kinds of the other monomers may be one, or may be two or more.

Examples of the other monomer include vinyl acetate, vinyl propionate, styrene, acrylamide, methacrylamide, a monoester or diester of maleic acid, derivatives thereof, N-methylolacrylamide, glycidyl acrylate, glycidyl methacrylate, N,N-dimethylaminoethyl acrylate, N,N-dimethylaminopropylmethacrylamide, 2-hydroxypropyl acrylate, N,N-dimethylacrylamide, N,N-diethylacrylamide, imide acrylate, N-vinylpyrrolidone, oligoester acrylate, ε-caprolactone acrylate, dicyclopentanyl (meth)acrylate, dicyclopentenyl (meth)acrylate, methoxylated cyclododecatriene acrylate, and methoxyethyl acrylate. The other monomer is preferably N-vinylpyrrolidone because the effects of the present invention can be expressed to a larger extent.

The content of the other monomer in the entirety of raw material monomers for obtaining the product of the reaction caused by the irradiation with the active energy ray is preferably 1 wt% or more, more preferably 2 wt% or more, still more preferably 3 wt% or more, particularly preferably 4 wt% or more, most preferably 5 wt% or more. When the content falls within the range, the polysulfide-based pressure-sensitive adhesive tape of the present invention more sufficiently has a pressure-sensitive adhesive strength. An upper limit for the content is preferably 30 wt% or less, more preferably 20 wt% or less, still more preferably 15 wt% or less, particularly preferably 12 wt% or less, most preferably 10 wt% or less. When the content falls within the range, the pressure-sensitive adhesive tape is more excellent in oil resistance and the like.

A polyfunctional monomer may be adopted as a raw material monomer for obtaining the product of the reaction caused by the irradiation with the active energy ray. The number of kinds of the polyfunctional monomers may be one, or may be two or more.

When the polyfunctional monomer is adopted as a raw material monomer for obtaining the product of the reaction caused by the irradiation with the active energy ray, a cross-linked structure derived from the polyfunctional monomer can be built in the sulfur-containing polymer . That is, the polyfunctional monomer can act as a cross-linking agent.

Examples of the polyfunctional monomer include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri (meth)acrylate, dipentaerythritol hexa (meth)acrylate, urethane acrylate, epoxy acrylate, and polyester acrylate. The other monomer is preferably hexanediol di(meth)acrylate because the effects of the present invention can be expressed to a larger extent.

The content of the polyfunctional monomer in the entirety of the raw material monomers for obtaining the product of the reaction caused by the irradiation with the active energy ray is preferably from 1 wt% to 30 wt%, more preferably from 2 wt% to 20 wt%, still more preferably from 3 wt% to 15 wt%, particularly preferably from 4 wt% to 12 wt%, most preferably from 5 wt% to 10 wt%. When the content of the polyfunctional monomer in the entirety of the raw material monomers for obtaining the product of the reaction caused by the irradiation with the active energy ray falls within the range, the polysulfide-based pressure-sensitive adhesive tape of the present invention is more excellent in oil resistance and the like, and more sufficiently has a pressure-sensitive adhesive strength.

The sulfur-containing polymer may adopt a structure such as: a heterogeneous network structure in which a (meth)acrylic polymer formed by the polymerization of the (meth)acrylic monomer and the polysulfide polymer (P2) are bonded to each other by a graft structure or a cross-linked structure; an IPN structure (interpenetrating polymer network layer) in which the (meth)acrylic polymer formed by the polymerization of the (meth)acrylic monomer and the polysulfide polymer (P2) each independently adopt a cross-linked structure; or such a semi-IPN structure that one of the (meth)acrylic polymer formed by the polymerization of the (meth)acrylic monomer and the polysulfide polymer (P2) has a cross-linked structure, and the other has a polymer chain of a linear structure to penetrate the inside of the cross-linked structure. Of those structures, the heterogeneous network structure in which the (meth)acrylic polymer formed by the polymerization of the (meth)acrylic monomer and the polysulfide polymer (P2) are bonded to each other by the graft structure or the cross-linked structure is preferred because the effects of the present invention can be expressed to a larger extent.

The irradiation with the active energy ray in obtaining the sulfur-containing polymer may be performed by any appropriate method to the extent that the effects of the present invention are not impaired. A typical method is, for example, as described below. The (meth)acrylic monomer is used as a diluent, and the reaction between the polysulfide oligomer (P1) and the chain extender is performed in the (meth)acrylic monomer to form the polysulfide polymer (P2). A mixture containing the (meth)acrylic monomer and the polysulfide polymer (P2) as main components is applied onto a base material (subjected to a release treatment as required) or the like, and is irradiated with the active energy ray to be cured, followed by the peeling and removal of the base material or the like. Thus, the pressure-sensitive adhesive layer may be formed. Alternatively, when the base material or the like is not peeled or removed, the pressure-sensitive adhesive layer may be obtained in the form of being laminated on the base material or the like.

Any appropriate active energy ray may be adopted as the active energy ray. Examples of such active energy ray include an infrared ray, a visible light ray, UV light, an X-ray, and an electron beam. Such active energy ray is preferably UV light. Any appropriate irradiation dose may be adopted as the irradiation dose of the active energy ray to the extent that the effects of the present invention are not impaired.

When the sulfur-containing polymer is obtained as the product of the reaction between the polysulfide polymer (P2) and the (meth)acrylic monomer caused by the irradiation with the active energy ray, the system of the reaction preferably includes an active energy ray polymerization initiator.

Examples of the active energy ray polymerization initiator include: ketone-based initiators, such as benzophenone, acetophenone, quinone, naphthoquinone, anthraquinone, and fluorenone; azo-based initiators, such as azobisisobutyronitrile; and peroxide-based initiators, such as benzoyl peroxide and perbenzoic acid. As a commercially available energy ray polymerization initiator, there are given, for example, products available under the product names "Irgacure 127", "Irgacure 184", "Irgacure 651", "Irgacure 819", and "Irgacure 2959" from BASF.

The number of kinds of the active energy ray polymerization initiators may be only one, or may be two or more.

The usage amount of the active energy ray polymerization initiator is preferably from 0.01 wt% to 10 wt%, more preferably from 0.1 wt% to 5 wt%, still more preferably from 0.5 wt% to 4 wt%, particularly preferably from 0.8 wt% to 3 wt%, most preferably from 1 wt% to 2 wt% with respect to the entirety of the raw material monomers for obtaining the product of the reaction caused by the irradiation with the active energy ray. When the usage amount of the active energy ray polymerization initiator falls within the range, the reaction for obtaining the product of the reaction caused by the irradiation with the active energy ray can be efficiently advanced.

The pressure-sensitive adhesive layer may contain any appropriate other component to the extent that the effects of the present invention are not impaired. The number of kinds of such other components may be one, or may be two or more. Examples of such other component include a cross-linking agent, a curing (cross-linking) accelerator, a tackifier, a vulcanizing agent, a thickener, an age resistor, an antioxidant, and a solvent.

As described above, a mode of obtaining a pressure-sensitive adhesive layer is, for example, the following mode. The (meth)acrylic monomer is used as a diluent, and the reaction between the polysulfide oligomer (P1) and the chain extender is performed in the (meth)acrylic monomer to form the polysulfide polymer (P2). A mixture containing the (meth)acrylic monomer and the polysulfide polymer (P2) as main components is applied onto a base material (subjected to a release treatment as required) or the like, and is irradiated with the active energy ray to be cured, followed by the peeling and removal of the base material or the like. Thus, the pressure-sensitive adhesive layer is formed. Alternatively, when the base material or the like is not peeled or removed, the pressure-sensitive adhesive layer may be obtained in the form of being laminated on the base material or the like.

### Examples

Now, the present invention is described specifically by way of Examples. However, the present invention is by no means limited to Examples. Test and evaluation methods in Examples and the like are as described below. The term "part(s)" in the following description means "part (s) by weight" unless otherwise specified, and the term "%" in the following description means "wt%" unless otherwise specified.

### <Measurement of Pressure-sensitive Adhesive Strength to Polyethylene Terephthalate at Temperature of 23°C and Humidity of 65%>

### (With Regard to Examples)

A SUS304 plate was bonded to the entirety of the surface of a pressure-sensitive adhesive tape (measuring 20 mm wide by 140 mm long) opposite to its pressure-sensitive adhesive layer through intermediation of a double-sided adhesive tape (manufactured by Nitto Denko Corporation, product name: "No. 531") with a 2-kilogram hand roller.

Next, a polyethylene terephthalate film (manufactured by Toray Industries, Inc., product name: "Lumirror S-10", thickness: 50 µm, width: 30 mm) was bonded to the entirety of the surface of the pressure-sensitive adhesive layer (temperature: 23°C, humidity: 65%, one reciprocation of a 2-kilogram roller).

A sample for an evaluation obtained as described above was subjected to a tensile test. A tester available under the product name "Shimadzu Autograph AG-120 kN" from Shimadzu Corporation was used as a tensile tester. The sample for an evaluation was set in the tensile tester, and was then left to stand under an environmental temperature of 23°C for 30 minutes, followed by the initiation of the tensile test. The tensile test was performed under the conditions of a peel angle of 180° and a peel rate (tensile rate) of 300 mm/min. A load at the time of the peeling of the pressure-sensitive adhesive tape from the PET film was measured, and the maximum load at that time was defined as the pressure-sensitive adhesive strength of the tape.

### (With Regard to Comparative Example)

A SUS304 plate was bonded to the entirety of one surface of a sealant cured product through intermediation of a double-sided adhesive tape (manufactured by Nitto Denko Corporation, product name: "No. 531") with a 2-kilogram hand roller.

Next, a polyethylene terephthalate film (manufactured by Toray Industries, Inc., product name: "Lumirror S-10", thickness: 50 µm, width: 30 mm) was bonded to the entirety of the other surface of the sealant cured product (temperature: 23°C, humidity: 65%, one reciprocation of a 2-kilogram roller).

A sample for an evaluation obtained as described above was subjected to a tensile test. A tester available under the product name "Shimadzu Autograph AG-120 kN" from Shimadzu Corporation was used as a tensile tester. The sample for an evaluation was set in the tensile tester, and was then left to stand under an environmental temperature of 23°C for 30 minutes, followed by the initiation of the tensile test. The tensile test was performed under the conditions of a peel angle of 180° and a peel rate (tensile rate) of 300 mm/min. A load at the time of the peeling of the pressure-sensitive adhesive tape from the PET film was measured, and the maximum load at that time was defined as the pressure-sensitive adhesive strength of the tape.

### <Measurement of Storage Modulus of Elasticity at Temperature of 25°C>

A measurement sample was produced so as to have a thickness of from 1.5 mm to 2 mm. After that, a sample for measurement was punched out of the sample with a punch having a diameter of 7.9 mm. Measurement was performed with a viscoelasticity spectrometer (product name: "ARES", manufactured by Rheometric Scientific Inc.) at a rate of temperature increase of 5°C/min while a chuck pressure and a shear frequency were set to 100 gf and 1 Hz, respectively. A stainless-steel parallel plate of 8 mmϕ (manufactured by TA Instruments, Model 708.0157) was used as an apparatus. The storage modulus of elasticity of the sample at 25°C was determined from the resultant viscoelasticity curve. The pressure-sensitive adhesive layer of a pressure-sensitive adhesive tape was used as a measurement sample for each of Examples, and a sealant cured product was used as a measurement sample for Comparative Example.

### <Measurement of Ball Tack at Temperature of 23°C and Humidity of 65%>

### (With Regard to Examples)

Measurement was performed in conformity with an inclined ball tack test method specified in JIS Z 0237 (inclination angle: 30°, temperature: 23°C, humidity: 65%). Specifically, a pressure-sensitive adhesive tape was set at a predetermined position of an inclined ball tack apparatus (ball-rolling apparatus) in which the angle of an inclined plate was set to 30° with the surface of its pressure-sensitive adhesive layer facing upward. After that, a polyethylene terephthalate film for a runway (polyethylene terephthalate film specified in JIS C 2318 having a thickness of 25 µm) was bonded to a predetermined position of the surface of the pressure-sensitive adhesive layer (position at which the length of the surface of the pressure-sensitive adhesive layer became 100 mm). Then, a ball was placed so that the center of the ball was positioned at the ball start position at which the length of the runway became 100 mm in accordance with the size of the ball, followed by the rolling of the ball. A ball having the largest size out of the balls stopping on a pressure-sensitive adhesive surface in a measurement portion was found. Further, a total of three balls, that is, the largest ball thus found, and balls slightly smaller or larger than the ball were each rolled once in the same manner as in the foregoing, that is, the rolling was performed a total of three times to confirm that the ball that had been found to be the ball having the largest size was the largest ball fitting into measurement specifications, thereby measuring the tack of the tape.

### (With Regard to Comparative Example)

Measurement was performed in conformity with an inclined ball tack test method specified in JIS Z 0237 (inclination angle: 30°, temperature: 23°C, humidity: 65%). Specifically, a sealant cured product was set at a predetermined position of an inclined ball tack apparatus (ball-rolling apparatus) in which the angle of an inclined plate was set to 30°. After that, a polyethylene terephthalate film for a runway (polyethylene terephthalate film specified in JIS C 2318 having a thickness of 25 µm) was bonded to a predetermined position of the surface of the sealant cured product (position at which the length of the surface of the sealant cured product became 100 mm). Then, a ball was placed so that the center of the ball was positioned at the ball start position at which the length of the runway became 100 mm in accordance with the size of the ball, followed by the rolling of the ball. A ball having the largest size out of the balls stopping on a pressure-sensitive adhesive surface in a measurement portion was found. Further, a total of three balls, that is, the largest ball thus found, and balls slightly smaller or larger than the ball were each rolled once in the same manner as in the foregoing, that is, the rolling was performed a total of three times to confirm that the ball that had been found to be the ball having the largest size was the largest ball fitting into measurement specifications, thereby measuring the tack of the product.

### <Oil Resistance Evaluation>

### (With Regard to Examples)

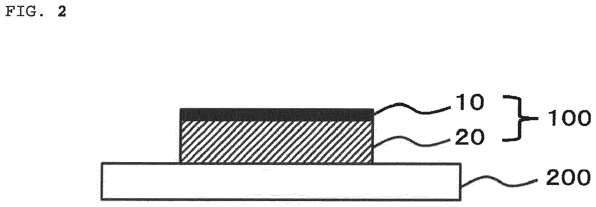

A pressure-sensitive adhesive tape serving as an evaluation sample was cut into a size measuring 25 mm wide by 100 mm long, and was pressure-bonded onto a SUS304BA plate serving as an adherend having an area larger than the size by reciprocating a hand roller once. Thus, a measurement sample (A) was obtained. FIG. **2** is a schematic sectional view of the measurement sample (A) when viewed from a short-side side thereof. In FIG. **2****,** the pressure-sensitive adhesive tape **100** formed of the base material **10** and the pressure-sensitive adhesive layer **20** is pressure-bonded onto a SUS304BA plate **200.**

Hyjet V (phosphate-based flame-retardant hydraulic oil, manufactured by Exxon Mobil Corporation) was loaded in an amount of 700 mL or more into a 900-milliliter glass bottle to prepare a Hyjet V bath (B).

The Hyjet V bath (B) was bathed in a water bath set to 60°C, and a temperature gauge was used to confirm that the temperature of the Hyjet V became 60°C. After that, the measurement sample (A) was loaded into the Hyjet V bath (B) so that its entirety was immersed therein, followed by sealing.

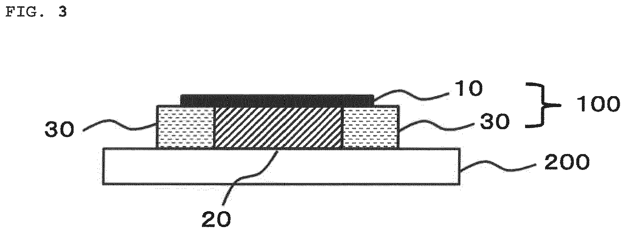

After a lapse of 168 hours, the measurement sample (A) was removed from the Hyjet V bath (B), and the length of a site of the pressure-sensitive adhesive layer that had discolored and swollen from an end portion of the layer was measured. FIG. 3 is a schematic sectional view of the measurement sample (A) removed from the Hyjet V bath (B) when viewed from the short-side side. In FIG. 3, the pressure-sensitive adhesive tape **100** formed of the base material 10 and the pressure-sensitive adhesive layer **20** is pressure-bonded onto the SUS304BA plate **200,** and in the pressure-sensitive adhesive layer **20,** a site **30** that has been discolored and swollen by the Hyjet V, the site extending from each of both end portions of the layer toward the inside thereof, is observed.

### (With Regard to Comparative Example)

A sealant cured product serving as an evaluation sample was cut into a size measuring 25 mm wide by 100 mm long, and was pressure-bonded onto a SUS304BA plate serving as an adherend having an area larger than the size by reciprocating a hand roller once. Thus, a measurement sample (A) was obtained.

Hyjet V (phosphate-based flame-retardant hydraulic oil, manufactured by Exxon Mobil Corporation) was loaded in an amount of 700 mL or more into a 900-milliliter glass bottle to prepare a Hyjet V bath (B).

The Hyjet V bath (B) was bathed in a water bath set to 60°C, and a temperature gauge was used to confirm that the temperature of the Hyjet V became 60°C. After that, the measurement sample (A) was loaded into the Hyjet V bath (B) so that its entirety was immersed therein, followed by sealing.

After a lapse of 168 hours, the measurement sample (A) was removed from the Hyjet V bath (B), and the length of a site of the sealant cured product that had discolored and swollen from an end portion of the product was measured in the same manner as in Examples.

### [Example 1]

100 Parts by weight of a polysulfide oligomer (manufactured by Toray Fine Chemicals Co., Ltd., product name: "THIOKOL LP-55"), 1 part by weight each of UV initiators (manufactured by BASF, product names: "Irgacure 819" and "Irgacure 651"), 0.1 part by weight of a tertiary amine catalyst (manufactured by Tokyo Chemical Industry Co., Ltd., product name: "2,4,6-tris(dimethylaminomethyl)phenol"), 10 parts by weight of butyl acrylate, 7 parts by weight of N-vinylpyrrolidone, 3 parts by weight of acrylic acid, 3 parts by weight of 1,6-hexanediol diacrylate, and 1.5 parts by weight of abifunctionalisocyanatecross-linkingagent (manufacturedbyAsahi Kasei Chemicals Corporation, product name: "DURANATE 50M-HDI") were mixed to prepare a polysulfide polymer. The polysulfide polymer was applied to the treated surface of a release liner (manufactured by Mitsubishi Polyester Film, Inc., product name: "MRE", thickness: 38 µm) to provide an applied layer. A second release liner (manufactured by Mitsubishi Polyester Film, Inc., product name: "MRF", thickness: 38 µm) was bonded onto the applied layer in such a form that the applied layer and the release-treated surface of the release liner were in contact with each other.

Next, both surfaces of the applied layer were irradiated with UV light having an illuminance of 5 mW/cm² for 10 minutes to cure the applied layer. Thus, a pressure-sensitive adhesive layer having a thickness of 1,000 µm was obtained. "BLACK LIGHT" manufactured by Toshiba Corporation was used as a source for the UV light. In addition, the illuminance of the UV light was regulated by using an industrial UV checker having a peak sensitivity wavelength of about 350 nm (product name: "UVR-T1", manufactured by Topcon Corporation, light-receiving portion: Model UD-T36, maximum sensitivity: 350 nm).

Thus, a pressure-sensitive adhesive tape (1) in which the pressure-sensitive adhesive layer having a thickness of 1,000 µm was carried between the two release liners was produced.

The results are shown in Table 1.

### [Example 2]

A pressure-sensitive adhesive tape (2) was produced in the same manner as in Example 1 except that butyl acrylate, N-vinylpyrrolidone, and acrylic acid were not added at the time of the preparation of the polysulfide polymer.

The results are shown in Table 1.

### [Comparative Example 1]

100 Parts by weight of the main agent of a polysulfide-based two-liquid mixing-type sealant (manufactured by PPG Industries, product name: "PR-1422 Class B") and 13.3 parts by weight of a curing accelerator were mixed to prepare a liquid sealant. The liquid sealant was applied to the treated surface of a release liner (manufactured by Mitsubishi Polyester Film, Inc., product name: "MRE", thickness: 38 µm) so as to have a thickness of 1 mm. Thus, an applied layer was obtained. The resultant applied layer was left at rest under the conditions of 25°C and 65%RH for 1 week to provide a sealant cured product.

The results are shown in Table 1.

**Table 1**

| Material | | Example 1 | Example 2 | Comparative Example 1 |
|---|---|---|---|---|
| Polysulfide oligomer | LP-55 | 100 | 100 | Two-liquid mixing-type sealant PR-1422 Class B |
| Polyisocyanate compound | HDI | 1.5 | 1.5 | |
| Catalyst | TAP | 0.1 | 0.1 | |
| Acrylic monomer | BA | 10 | | |
| | NVP | 7 | | |
| | AA | 3 | | |
| UV initiator | Irg651 | 1 | 1 | |
| | Irg819 | 1 | 1 | |
| Polyfunctional (meth)acrylate monomer | HDDA | 3 | 3 | |
| Ball tack | - | 32 | 32 | 1 |
| Storage modulus of elasticity at 25°C | Pa | 3.27.E+04 | 4.05.E+04 | 8.83.E+05 |
| Pressure-sensitive adhesive strength to PET | N/20 mm | 22.59 | 16.60 | 0.26 |
| Immersion distance | mm | 5 mm | 1 mm or less | 1 mm or less |

### Industrial Applicability

The polysulfide-based pressure-sensitive adhesive tape of the present invention can be suitably utilized as a sealing agent for a large adherend, such as a building material, a vehicle, an aircraft, or a ship.

### Reference Signs List

- **10**: base material
- **20**: pressure-sensitive adhesive layer
- **30**: discolored and swollen site of pressure-sensitive adhesive layer
- **100**: polysulfide-based pressure-sensitive adhesive tape
- **200**: SUS304BA plate

## Claims

1. A polysulfide-based pressure-sensitive adhesive tape, comprising a pressure-sensitive adhesive layer formed from a polysulfide-based pressure-sensitive adhesive composition containing a sulfur-containing polymer,
wherein the sulfur-containing polymer has a disulfide structure represented by -S-S- in a main chain thereof, and
wherein a ball number for tack of the pressure-sensitive adhesive layer measured by an inclined ball tack test method (inclination angle: 30°) specified in JIS Z 0237 at a temperature of 23°C and a humidity of 65% is 2 or more.

2. The polysulfide-based pressure-sensitive adhesive tape according to claim 1, wherein the sulfur-containing polymer has an ether structure represented by the general formula (1) in the main chain:
-R¹-O-R²-O-R³- ··· (1)
in the general formula (1), R¹, R², and R³ each independently represent an alkylene group having 1 to 4 carbon atoms.

3. The polysulfide-based pressure-sensitive adhesive tape according to claim 1 or 2, wherein the sulfur-containing polymer has a bonding structure represented by the general formula (2) in the main chain.
-S-C(=O)-NH- ··· (2)

4. The polysulfide-based pressure-sensitive adhesive tape according to any one of claims 1 to 3, wherein the sulfur-containing polymer comprises a product of a reaction between a polysulfide polymer (P2) and a (meth) acrylic monomer caused by irradiation with an active energy ray, the polysulfide polymer (P2) being obtained by increasing a molecular weight of a polysulfide oligomer (P1) having a molecular weight of from 500 to 10, 000 with a chain extender, the polysulfide oligomer (P1) having thiol groups at both terminals thereof and having a disulfide structure represented by -S-S- in a main chain thereof.

5. The polysulfide-based pressure-sensitive adhesive tape according to claim 4, wherein the chain extender comprises a polyisocyanate compound.

6. The polysulfide-based pressure-sensitive adhesive tape according to claim 5, wherein the polyisocyanate compound comprises a diisocyanate compound.

7. The polysulfide-based pressure-sensitive adhesive tape according to any one of claims 4 to 6, wherein the (meth)acrylic monomer contains a polyfunctional (meth)acrylate monomer.

8. The polysulfide-based pressure-sensitive adhesive tape according to claim 7, wherein the polyfunctional (meth)acrylate monomer comprises a bifunctional (meth)acrylate monomer.
